Europäisches Patentamt

(19) European Patent Office

Office européen des brevets

(11) Publication number: **0 314 642 B1**

## EUROPEAN PATENT SPECIFICATION

(12)

(45) Date of publication of patent specification :
04.09.91 Bulletin 91/36

(51) Int. Cl.$^5$: **B60R 1/00**, B60R 11/02

(21) Application number : 88830442.5

(22) Date of filing : 25.10.88

(54) Comprehensive monitoring system for the drivers' cabs of tractors.

(30) Priority : 26.10.87 IT 6789287

(43) Date of publication of application :
03.05.89 Bulletin 89/18

(45) Publication of the grant of the patent :
04.09.91 Bulletin 91/36

(84) Designated Contracting States :
AT CH DE ES FR GB LI

(56) References cited :
WO-A-84/04499
DE-A- 1 555 360
DE-A- 2 223 816
FR-A- 2 465 612
GB-A- 2 144 682

(73) Proprietor : SAME S.p.A.
Viale F. Cassani, 14
I-24047 Treviglio Bergamo (IT)

(72) Inventor : Bergese, Claudio
c/o Same S.p.A. Viale F. Cassani, 14
I-24047 Treviglio (Bergamo) (IT)
Inventor : Vicentini, Vittorio
c/o Same S.p.A. Viale F. Cassani, 14
I-24047 Treviglio (Bergamo) (IT)
Inventor : Hampel, Gerard
c/o Same S.p.A. Viale F. Cassani, 14
I-24047 Treviglio (Bergamo) (IT)

(74) Representative : Buzzi, Franco et al
c/o Jacobacci-Casetta & Perani S.p.A. Via
Alfieri, 17
I-10121 Torino (IT)

EP 0 314 642 B1

## Description

The present invention relates to a monitoring system for the drivers' cabs of tractors, of the type comprising an image display possibly provided with a loudspeaker and at least one television camera, possibly orientable, adapted for installation on the tractor in a rearward-looking position and possibly provided with remote controls.

A monitoring system of the above-mentioned type is known from DE-A-1555360 for aided rearward vision during working operation. Such known system is intended to provide a signal, either acoustic or optical, in case of incorrect working situations of the implement attached to the rear of the tractor.

In order to provide a comprehensive system, the subject of the present invention is a monitoring system for the driver's cab of tractors of the above-mentioned type, characterised in that it further comprises:

— a tuning-detection colour matrix-audio-video control unit controllable by serial means and also provided with tuning-detection control for radio-television transmitters,

— an interface and conditioning unit arranged to receive input signals from sensors and detectors installed on the tractor, the interface unit being further provided with input/output communications with an equipment attached to the tractor,

— a signal mixing and processing unit connected between the television display and the interface and conditioning unit and connected to the control unit and the television camera, and

— a control keyboard operatively connected to the processing and mixing unit.

Preferably, the system also includes an audio-video recorder (video disc, video cassette, etc.) connected to the processing unit.

The comprehensive monitoring system according to the invention makes available to the operator of the tractor, in a direct and convenient manner, a plurality of functions which may be summarised as follows :

— instrumentation

— interactive electronic dashboard

• check panel
• performance monitor
• diagnostics
• exchange of controls and data between operators and electronically controlled equipment ;

— rearward vision

• detailed/panoramic vision of the working area
• detailed/panoramic vision of the positioning of equipment ;

— entertainment and instruction

• reception from radio-television transmitters
• video-cassette recording (also with operating instructions).

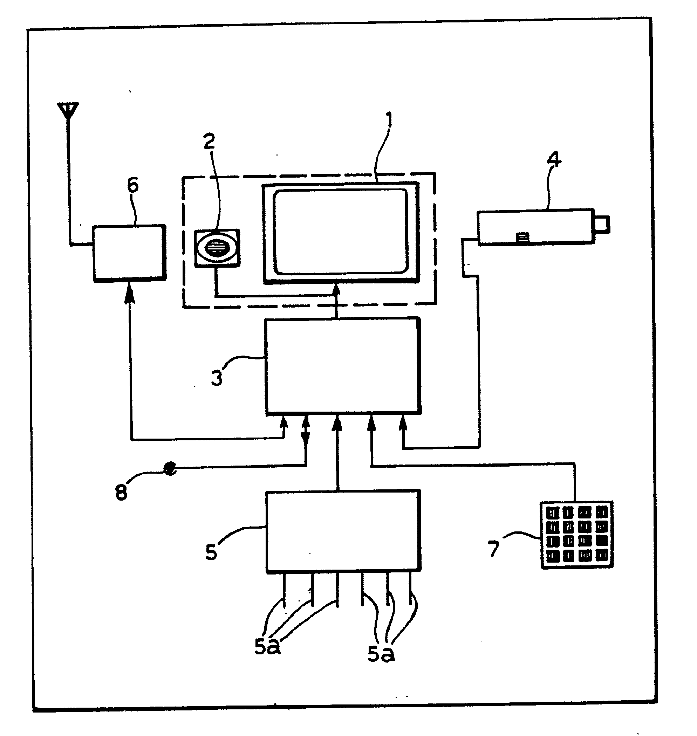

The invention will now be described in more detail with reference to the appended drawing, provided purely by way of non-limiting example, which shows in diagrammatic form the layout of the comprehensive monitoring system for drivers' cabs of tractors according to the invention.

With reference to the drawing, the system according to the invention includes a black-and-white or colour TRC-type monitor 1 with an associated loudspeaker 2, both installed in the driver's cab of a tractor in a position where they can easily be seen by the driver. The monitor 1 is conveniently provided with a 6-10" diagonal medium-resolution screen and is suitable both for the reproduction of television pictures and for the reproduction of graphic symbols.

The monitor 1 is connected to an electronic processing unit 3 arranged to receive, in the manner explained below, signals to be processed according to one or more predetermined programs, and to display the results in the form of images and audio signals by means of the monitor 1 and the loudspeaker 2. In particular, the processor 3 is able to fulfil the functions of processing and mixing of signals, generation of symbols and alpha-numeric messages, organisation of priorities, supervision and diagnostics.

The signals sent to the processor 3 come from a television camera 4, from an interface and conditioning unit 5, from a control unit 6, and from a control keyboard 7.

The television camera 4, which may be black-and-white or colour, is of the remotely orientable type and possibly provided with automatic or remote-controlled focusing or zoom. It is arranged for installation in the rear region of the vehicle for detailed or panoramic cover of the working area and/or of the positioning of the equipment attached to the rear of the tractor.

The interface and conditioning unit 5 is provided with a series of inputs 5a connected to sensors, detectors and any other processing unit on the tractor, and is arranged normally to acquire the following classes of input signals :

— on-off signals, earthed or at + 12V
— 0-5/0-12V earthed analogue signals ;
— differential analogue signals, 0-1 V/0-12V ;
— preformed pulse signals-0-10 KHz TTL levels from phonic wheels, variable-reluctance sensors;
— line or lines for connection to transported equipment provided with electronics.

The control unit 6 is constituted by a tuning-detection-colour matrix-audio-video unit controllable by serial means (remote control channel) through the processor 3. It is also provided with electronics for amplification, selection, and detection of audio and video signals in black-and-white or colour, broadcast by electromagnetic wave transmitters, for example, AM/FM radio stations and/or television transmitters.

The control keyboard 7 may be of conventional push-button type or of the "Touch screen" type, or even a cursor control of the "Track ball" or "Joystick" type, etc.

The processing unit 3 is also provided with a socket 8 for possible connection of a video cassette recorder.

By virtue of the above-described conformation, the monitoring system according to the invention is able to fulfil the following main functions :

— instrumentation

- interactive electronic dashboard
- check panel
- performance monitor
- diagnostics
- exchange of control and data between the operator and electronically controlled equipment;

— rearward vision

- detailed/panoramic vision of the working area
- detailed/panoramic vision of the positioning of equipment ;

— entertainment and instruction

- reception of television transmissions
- video cassette recording, also with operating instructions.

It is possible to present several classes of information simultaneously, for example, superimposed on part of the screen (windowing), etc.. In the case of conflicting demands, the central processor organises the display priority. This occurs according to prearranged preceding levels so as to ensure signalling appropriate to the importance of the event.

**Claims**

1. A comprehensive monitoring system for drivers' cabs of tractors, comprising an image display (1) possibly provided with a loudspeaker (2) and at least one television camera (4), possibly orientable, adapted for installation on the tractor in a rearward-looking position and possibly provided with remote controls, characterised in that it further comprises :
   — a tuning-detection colour matrix-audio-video control unit (6) controllable by serial means and also provided with tuning-detection control for radio-television transmitters,
   — an interface and conditioning unit (5) arranged to receive input signals from sensors and detectors installed on the tractor, the interface unit being further provided with input/output communications with an equipment attached to the tractor,
   — a signal processing and mixing unit (3) connected between the television display (1) and the interface and conditioning unit (5) and connected to the control unit (6) and the television camera (4),
   — a control keyboard (7) operatively connected to the processing and mixing unit (3).

2. A system according to Claim 1, characterised in that it also includes an audio-video recorder (8) connected to the processing and mixing unit (3).

3. A system according to Claim 1 or Claim 2, characterised in that the processing unit (3) is arranged to present information on the display (1) according to a hierarchical system of prearranged precedence levels.

**Patentansprüche**

1. Umfassendes Überwachungssystem für Fahrerkabinen von Traktoren, wobei das System eine Bildanzeige (1), die möglicherweise mit einem Lautsprecher (2) versehen ist, sowie zumindest eine Fernsehkamera (4) enthält, die möglicherweise ausrichtbar ist, um sie in den Traktor in einer nach hinten gerichteten Stellung einbauen zu können, wobei sie möglicherweise mit Fernsteuerungen versehen ist, dadurch gekennzeichnet, daß das überwachungssystem weiters enthält :
   eine Abstimm/Abtast-Farbmatrix-Ton/Video-Steuerstufe (6), die seriell ansteuerbar und weiters mit einer Abstimm/Abtast-Steuerung für Rundfunk/ Fernseh-Sender versehen ist,
   eine Schnittstellen- und Anpassungsstufe (5), die angeordnet ist, um Eingangssignale von Fühlern und Detektoren zu empfangen, die im Traktor eingebaut sind, wobei die Schnittstellenstufe weiters mit Ein/Aus-Verbindungen zu einem Gerät versehen ist, das am Traktor angebracht ist ;
   eine Signalverarbeitungs- und Mischstufe (3), die zwischen der Fernsehanzeige (1) und der Schnittflächen- und Anpassungsstufe (5) liegt und mit der Steuerstufe (6) und der Fernsehkamera (4) verbunden ist ; und
   eine Steuertastatur (7), die betriebsmäßig mit der Verarbeitungs- und Mischstufe (3) verbunden ist.

2. System gemäß Anspruch 1, dadurch gekennzeichnet, daß das System weiters ein Ton/Video-Gerät (8) aufweist, das mit der Verarbeitungs- und Mischstufe (3) verbunden ist.

3. System gemäß Anspruch 1 oder 2, dadurch gekennzeichnet, daß die Verarbeitungsstufe (3) so angeordnet ist, um der Anzeige (1) eine Information anzubieten, die einem hierarchischen System von vorgegebenen Vorrangpegeln entspricht.

## Revendications

1. Un système de surveillance globale pour cabines de tracteurs, comprenant un dispositif d'affichage d'image (1) éventuellement équipé d'un haut parleur (2) et d'au moins une caméra de télévision (4), éventuellement orientable, prévue pour être installée sur le tracteur dans une position de visée arrière et éventuellement équipée d'une télécommande, caractérisé en ce qu'il comporte en outre :
   — une unité de commande à étage de syntonisation/détection audio-vidéo couleur (6), commandable par liaison série et également équipée de commandes de syntonisation/détection pour émetteurs de radio-télévision ;
   — une unité d'interface et de conditionnement (5) prévue pour recevoir des signaux d'entrée de capteurs et de détecteurs installés sur le tracteur, l'unité d'interface étant en outre équipée de liaisons d'entrées/sorties avec un équipement relié au tracteur ;
   — une unité de mélange et de traitement de signaux (3) connectée entre l'unité d'interface et de conditionnement (5) et le dispositif d'affichage de télévision (1) et connectée à l'unité de commande (6) et à la caméra de télévision (4) ;
   — un clavier de commande (7) raccordé à l'unité de mélange et de traitement de signaux (3).

2. Un système selon la revendication 1, caractérisé en ce qu'il comporte en outre un enregistreur audio-vidéo (8) raccordé à l'unité de mélange et de traitement de signaux (3).

3. Un système selon la revendication 1 ou la revendication 2, caractérisé par le fait que l'unité de traitement (3) est prévue pour présenter l'information sur le dispositif d'affichage (1) selon un système hiérarchique de niveaux de priorité prédéterminés.